# EUROPÄISCHE PATENTANMELDUNG

(11) **EP 4 527 531 A1**
(43) Veröffentlichungstag der Anmeldung: **26.03.2025**
(21) Anmeldenummer: 24184941.3
(22) Anmeldetag: 27.06.2024
(51) Int. Cl.: B23D 3/02, B23D 79/02

(54) **MESSER UND MESSERHALTER**

(30) Priorität: 25.09.2023 DE 102023125970
(71) Anmelder: Urban GmbH & Co. Maschinenbau KG, 87700 Memmingen (DE)
(72) Erfinder: Henkel, Markus, 87752 Holzgünz-Schwaighausen (DE)
(74) Vertreter: Patentanwälte Olbricht, Buchhold, Keulertz Partnerschaft mbB

(57) **Zusammenfassung**

Vorgeschlagen wird ein Messer (2) für das Nutschneiden entlang einer Schneidrichtung (S) im Stoß von zwei zusammengeschweißten Kunststoffprofilen, umfassend zwei Nebenschneiden (4, 6) und eine Hauptschneide (8), welche zwischen den beiden Nebenschneiden (4, 6) angeordnet ist, wobei die zwei Nebenschneiden (4, 6) in Schneidrichtung (S) vor der Hauptschneide (8) angeordnet sind.

## Beschreibung

Die Erfindung betrifft ein Messer für das Nutschneiden entlang einer Schneidrichtung im Stoß von zwei zusammengeschweißten Kunststoffprofilen gemäß Anspruch 1 und einen Messerhalter nach Anspruch 8.

Es ist hinlänglich bekannt, Kunststoffprofile mittels Stumpfschweißen zu verbinden, beispielsweise um einen Fenster- oder Türrahmen zu fertigen. Es ergibt sich dann, dass im Stoß der Kunststoffprofile ein Schweißwulst entstehen kann, der sowohl ästhetisch nicht ansprechend als auch in einen Falz oder einen Eckbereich hineinragen und einen dichten Verschluss des Fensters oder der Tür behindern kann. Es ist daher üblich, entsprechend verschweißte Fenster oder Türen in einer Verputzmaschine im Stoßbereich zu bearbeiten. Hierzu werden Messer entlang einer Schneidrichtung geführt, derart, um den entstandenen Schweißwulst abzustechen oder abzuschneiden.

Diese Messer dienen zudem dazu, um einen Höhenunterschied der miteinander verschweißten Kunststoffprofile optisch zu kaschieren. Hierzu können die Messer eine Nut im Stoß der beiden Kunststoffprofile einbringen. Der Höhenunterschied kann beispielsweise herstellungsbedingt sein.

Aus der Praxis bekannte Messer, beispielsweise aus der DE 19918427 A1, schneiden jedoch nicht präzise und sauber genug. Zudem reißen sie mitunter den Span von den Kunststoffprofilen weg, sodass eine unsaubere Schnittfläche entsteht. Insbesondere kann an der Kante zwischen Kunststoffprofilaußenfläche und Nutwand ein Grat gebildet werden, der ebenfalls nachteilig ist. Zudem können auf den Kunststoffprofilen vorhandene Folien beschädigt werden.

Es sind zudem Kunststoffprofile bekannt, die eine Folie auf ihrer Außenseite aufweisen. Beispielsweise kann die Folie eine Schutzfolie sein, die nach dem Einbau des Rahmens entfernt wird, oder einer Dekorfolie sein, die den Rahmen dauerhaft zieren soll. Es sind auch Kunststoffprofile bekannt, die eine aufgesprühte Dekorschicht auf ihren Außenseiten aufweisen, welche den Rahmen dauerhaft zieren soll. Bisher bekannte Messer sind jedoch nicht in der Lage, die Folie oder Dekorschicht parallel zur Nut in zufriedenstellender Qualität mit einer sauberen Schnittkante zu schneiden. Zudem sind bekannte Folien und aufgesprühte Dekorschichten kratzempfindlich, so dass ein bisher notwendiger hoher Anpressdruck des Messers senkrecht zur Schneidrichtung mitunter Schäden an Folien/Deckschichten hinterlässt.

Bekannte Messer weisen zudem keine zufriedenstellende Schneidhaltigkeit auf und sind daher auch bezüglich ihrer Lebensdauer verbesserungswürdig.

Aufgabe der Erfindung ist daher das Schaffen eines Messers, das zumindest die oben genannten Probleme überwindet.

Hauptmerkmale der Erfindung sind in Anspruch 1 und 8 angegeben. Ausgestaltungen sind insbesondere Gegenstand der Ansprüche 2 bis 7 und 9.

Erfindungsgemäß wird ein Messer für das Nutschneiden entlang einer Schneidrichtung im Stoß von zwei zusammengeschweißten Kunststoffprofilen vorgeschlagen, umfassend zwei Nebenschneiden und eine Hauptschneide, welche zwischen den beiden Nebenschneiden angeordnet ist, wobei die zwei Nebenschneiden in Schneidrichtung vor der Hauptschneide angeordnet sind.

Somit eilen die Nebenschneiden der Hauptschneide in Schneidrichtung voraus, bzw. die Hauptschneide eilt den Nebenschneiden in Schneidrichtung nach. Die Nebenschneiden dienen dem Schneiden der Nutwände, die Hauptschneide dient dem Schneiden des Nutgrunds. Es ist nämlich erkannt worden, dass das Schneiden der Nutwände und ggf. der Folien/Dekorschicht vor dem Schneiden des Nutgrundes die Probleme des Stands der Technik überwindet. Die Nebenschneiden trennen nämlich zunächst das zu entfernende Material der Kunststoffprofile seitlich (in Nutlängsrichtung) ab, woraufhin die nachfolgende Hauptschneide das zu entfernende Material am Grund abtrennt. Das Material kann sodann aus der Nut herausgeschält werden.

Es ist dadurch eine Nut erzeugbar, die einen Höhenunterschied der miteinander verschweißten Kunststoffprofile optisch verbessert kaschiert. Das Messer erzeugt eine sauberere Schnittfläche unter Vermeidung eines Grats und schneidet ggf. vorhandene Folien/Dekorschichten sauberer ab. Zudem ist dessen Schneidhaltigkeit durch die Anordnung der Schneiden verbessert, denn das Material kann nun ausgehend von der Kunststoffprofilaußenfläche in Richtung des Nutgrundes geschnitten werden.

Es hat sich ferner gezeigt, dass sich das erfindungsgemäße Messer aufgrund vorauseilender Nebenschneiden bei nacheilender Hauptschneide selbst auf die Kunststoffprofile zieht (senkrecht zur Schneidrichtung). Es muss also weniger Anpressdruck auf das Messer aufgebracht werden, um dessen Abheben oder Auswandern zu verhindern. Dadurch erfahren Folien und Deckschichten weniger oder gar keine Beschädigungen.

Die zwei Nebenschneiden können in Schneidrichtung vollständig vor der Hauptschneide angeordnet sein. Dadurch kann eine besonders saubere Schnittfläche erzeugt werden. Das Messer kann eine Nut mit einem Nutgrund schneiden, der parallel zur Kunststoffprofilaußenfläche verlaufen kann. Das Messer kann eine Nut mit zwei sich gegenüberliegende Nutwände schneiden, welche zwischen Nutgrund und Kunststoffprofilaußenfläche angeordnet sind. Die Schneidrichtung kann parallel zu einer Kunststoffprofilaußenfläche verlaufen.

Gemäß einer Weiterbildung des Messers kann in Schneidrichtung betrachtet die Hauptschneide mit jeder der zwei Nebenschneiden einen Winkel oder ersten Winkel von mindestens 90° einschließen. Dadurch kann eine Nut ausgebildet werden, die sich ausgehend vom Nutgrund öffnet. Dadurch ist ein Schattenschlag durch die Nutwände in die Nut hinein verringert, sodass die Nut ästhetisch ansprechender wirkt und eine noch bessere Kaschierung eines Höhenunterschieds erfolgen kann. Es verbessert sich zudem das Schneidverhalten, insbesondere bei den vorauseilenden Nebenschneiden. Durch die Vermeidung eines spitzen Winkels zwischen Nutgrund und Nutwand werden zudem Schneidfehler vermieden und es findet eine geringere Belastung des Messers statt, so dass dessen Lebensdauer erhöht ist. Eine gebogene oder abschnittsweise gebogene Schneide kann durch eine Gerade symbolisiert werden, die beispielsweise mittels linearer Approximation erzeugbar ist. Aus dem Verlauf der Schneide ergibt sich somit ein resultierender Schneidenverlauf, nämlich die entsprechende Gerade.

Gemäß einer Weiterbildung des Messers kann längsschnittlich betrachtet die Hauptschneide oder eine Auswurframpe mit jeder der zwei Nebenschneiden einen Winkel oder zweiten Winkel von mehr als 90° einschließen. Der Längsschnitt kann in Schneidrichtung erfolgen. Es kann konstruktiv eingestellt werden, wie flach der Schneidenwinkel der Nebenschneiden ist. Ein optimal flacher Schneidenwinkel wirkt sich günstig auf das Schneidvermögen und die Sauberkeit des Schnittes aus, insbesondere in Kombination mit den vorauseilenden Nebenschneiden. Eine gebogene oder abschnittsweise gebogene Schneide kann durch eine Gerade symbolisiert werden, die beispielsweise mittels linearer Approximation erzeugbar ist. Aus dem Verlauf der Schneide ergibt sich somit ein resultierender Schneidenverlauf, nämlich die entsprechende Gerade.

Gemäß einer Weiterbildung des Messers können die zwei Nebenschneiden einen geraden oder gebogenen Verlauf aufweisen. Der Verlauf kann vollständig gerade/gebogen oder teilweise gerade/gebogen sein. Der gebogene Verlauf kann konkav oder konvex sein, bezogen auf das Messer. Der Verlauf kann längsschnittlich und/oder in Schneidrichtung und/oder senkrecht zur Schneidrichtung betrachtet sein.

Bei einem längsschnittlich betrachtet geraden Verlauf ergibt sich der Vorteil, dass die Schneide einfach und kostengünstig herstellbar ist. Dennoch ist die erfindungsgemäße Wirkung im Zusammenspiel mit den nacheilenden Hauptschneiden erreichbar. Bei einem längsschnittlich betrachtet gebogenen Verlauf ergibt sich der Vorteil, dass eine initiale Schneidkraft, mit der die Nebenschneiden ins Material eintauchen, konstruktiv einstellbar ist. Bei einem längsschnittlich betrachtet konkav gebogenen Verlauf können die Nebenschneiden mit kleinem Schnittwinkel in das Material eintauchen und eine in Richtung Nutgrund gerichtete Kraft auf das Material ausüben, sodass zunächst nur sehr wenig Material geschnitten wird und somit die Gefahr der Gratbildung reduziert ist.

Die hier genannten Verläufe der Nebenschneiden sind in jedem Fall in Kombination mit der nacheilenden Hauptschneide vorteilhaft, denn dadurch wird das zu entfernende Material nicht gebrochen, so wie es beispielsweise bei Stemmeisen oder stemmeisenähnlichen Schneiden üblich ist, sondern in der vorteilhaften Reihenfolge geschnitten, weshalb sich insbesondere saubere Schnittflächen ergeben.

Gemäß einer denkbaren Weiterbildung des Messers können die Nebenschneiden jeweils einen Nutwandschneideabschnitt und einen Auslaufradiusschneideabschnitt ausbilden. Die Nutwandschneideabschnitte dienen dem Schneiden der Nutwände und die Auslaufradiusschneideabschnitte dienen dem Schneiden jeweils eines Radius zwischen Nutwand und Kunststoffprofilaußenfläche, sodass dort die Kunststoffprofilaußenfläche über eine Rundung oder den Radius in die Nut übergeht. Das Schneiden des Radius kann der Vermeidung eines Grates dienen.

Gemäß einer denkbaren Weiterbildung des Messers können die Auslaufradiusschneideabschnitte in Schneidrichtung vor den Nutwandschneideabschnitten angeordnet sein. Dadurch werden zunächst die Radien geschnitten und das Material in Richtung einer Zentralebene (Nut erstreckt sich entlang und in der Zentralebene) und in Richtung Nutgrund gezogen. Dieses Schneiden des Radius kann der Vermeidung eines Grates dienen. Erst danach werden die Nutwände von den Nutwandschneideabschnitten geschnitten und dann wird der Nutgrund von der Hauptschneide geschnitten.

Gemäß einer Weiterbildung des Messers kann die Hauptschneide einen geraden, zumindest abschnittsweise gebogenen oder V-förmigen Verlauf aufweisen.

Der Verlauf kann vollständig gerade/gebogen oder teilweise gerade/gebogen sein. Der gebogene Verlauf kann konkav oder konvex sein, bezogen auf die Schneidrichtung. Der Verlauf kann senkrecht zur Schneidrichtung betrachtet sein.

Bei einem längsschnittlich betrachtet geraden Verlauf ergibt sich der Vorteil, dass die Schneide einfach und kostengünstig herstellbar ist. Dennoch ist die erfindungsgemäße Wirkung im Zusammenspiel mit den vorauseilenden Nebenschneiden erreichbar. Zudem ist eine sehr saubere Schnittfläche erreichbar. Bei einem längsschnittlich betrachtet gebogenen Verlauf ergibt sich der Vorteil, dass eine Schneidkraft insgesamt geringer ausfallen kann, da die Hauptschneide nicht quer zur Schneidrichtung, sondern gebogen dazu in das Material schneidet. Es lässt sich zudem eine sehr schmale Nut ausbilden. Bei einem längsschnittlich betrachtet V-förmigen Verlauf ergibt sich der Vorteil, dass auch dort eine Schneidkraft insgesamt geringer ausfallen kann, da die Hauptschneide nicht quer zur Schneidrichtung, sondern schräg dazu in das Material schneidet. Es lässt sich ferner eine sehr schmale Nut ausbilden. Der V-förmige Verlauf kann in entgegengesetzter Schneidrichtung verlaufen - das V öffnet sich somit in Schneidrichtung. Dadurch kann die Hauptschneide durch das Material gezogen werden und eine in Richtung Zentralebene gerichtete Kraft auf das Material ausüben, die sauberen Schnittflächen dient.

Gemäß einer Weiterbildung des Messers können die zwei Nebenschneiden unmittelbar in die Hauptschneide übergehen. Es kann eine durchgehende Gesamtschneide gebildet werden aus der Hauptschneide und den beiden Nebenschneiden. Dadurch können saubere Schnittflächen erzeugt werden.

Gemäß einer denkbaren Weiterbildung des Messers kann eine Gesamtschneide gebildet sein aus der Hauptschneide und den beiden Nebenschneiden, wobei sich die Gesamtschneide ausgehend von den beiden der Hauptschneide abgewandten Außenseiten der Nebenschneiden in Richtung Zentrum der Hauptschneide vollständig in entgegengesetzte Schneidrichtung erstreckt. Die Gesamtschneide weist somit keinen Abschnitt auf, der in die Schneidrichtung vorspringt. Dadurch kann die Gesamtschneide mit vorteilhaft negativem Schnittwinkel durch das Material gezogen werden und eine in Richtung Nutgrund gerichtete Kraft auf das Material ausüben, die sauberen Schnittflächen dient.

Gemäß einer Weiterbildung des Messers können die zwei Nebenschneiden entgegen der Schneidrichtung zur Hauptschneide hin verlaufen. Es ist ein negativer Schnittwinkel gebildet. Dadurch kann eine in Richtung Hauptschneide gerichtete Kraft auf das Material ausgeübt werden, die sauberen Schnittflächen dient. Es wird nämlich aufgrund des negativen Schnittwinkels keine spanhebende Kraft erzeugt. Zudem ist eine Gratbildung vermieden. Insbesondere können die Nebenschneiden aufgrund des negativen Schnittwinkels durch das Material gezogen werden. Der Verlauf kann vollständig zur Hauptschneide hin verlaufen. Dadurch eilt der Schnitt der Nutwände dem Schnitt des Nutgrunds voraus.

Gemäß einer denkbaren Weiterbildung des Messers kann es eine Auswurframpe umfassen, die in Schneidrichtung hinter der Hauptschneide angeordnet ist. Die Auswurframpe kann in entgegengesetzte Schneidrichtung und/oder bezüglich des Nutgrunds distanzierend verlaufen. Die Auswurframpe dient dem kontrollierten Entfernen des geschnittenen Materials aus der Nut. Mit Vorteil kann sich die Auswurframpe unmittelbar an die Hauptschneide anschließen, so dass die Rampe das von der Hauptschneide vollständig geschnittene Material entfernen kann.

Gemäß einer denkbaren Weiterbildung des Messers kann es eine Gleitfläche umfassen, die an zumindest einem Kunststoffprofil anliegen kann. Die Gleitfläche dient der Sicherstellung einer konstanten Nuttiefe entlang der Schneidrichtung.

Erfindungsgemäß wird zudem ein Messerhalter vorgeschlagen, umfassend ein offenbarungsgemäßes Messer und zumindest ein Profilkontaktelement. Das Messer kann an dem Halter befestigt sein. Das Profilkontaktelement dient der Kontaktierung des Profilelements / der Profilelemente und der Sicherstellung einer konstanten Nuttiefe entlang der Schneidrichtung. Der Messerhalter kann einen Grundkörper aufweisen. Der Grundkörper kann das Profilkontaktelement ausbilden oder tragen und das Messer tragen. Somit kann das Profilkontaktelement ein zum Messer separates Element sein. Es findet eine Funktionstrennung statt, die einer jeweils besser geeigneten Materialwahl zugutekommt. Bei der Wahl des Werkstoffs für das Messer muss nämlich nunmehr kein Reibungskoeffizient beachtet werden, denn es findet keine führende Gleitreibung des Messers mit den Profilelementen oder darauf angeordneten Folien oder Dekorschichten statt. Hingegen findet der Gleitkontakt mit dem Grundkörper statt. Denkbar ist, dass der Grundkörper aus einem Kunststoff mit einem Reibungskoeffizient von weniger als 0,1 gefertigt ist.

Gemäß einer Weiterbildung des Messerhalters kann das Profilkontaktelement eine Gleitfläche oder zumindest eine Rolle sein. Die Rolle belastet Kunststoffprofil/Folie/Dekorschicht vorteilhafterweise rollend und nicht schleifend, so dass Kratzer vermieden sind - es findet keine Reibbelastung und auch keine Verschiebung einer Folie statt.

Das Messer kann aus Werkzeugstahl bestehen. Das Messer kann einstückig ausgebildet sein. Das Messer kann ein Nutschneidemesser sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht eines Messerhalters,
- Fig. 2: eine perspektive Ansicht eines Messers,
- Fig. 3: eine Seitenansicht des Messers nach Fig. 1,
- Fig. 4: eine Frontansicht auf das Messer nach Fig. 1 beim Nutschneiden,
- Fig. 5: eine Längsschnittansicht auf das Messer nach Fig. 1 beim Nutschneiden,
- Fig. 6: eine Längsschnittansicht auf das Messer nach Fig. 1,
- Fig. 7a, 7b, 7c: einen skizzenartigen Verlauf von Schneiden,
- Fig. 8a, 8b, 8c: einen weiteren skizzenartigen Verlauf von Schneiden und
- Fig. 9a, 9b, 9c: einen weiteren skizzenartigen Verlauf von Schneiden.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

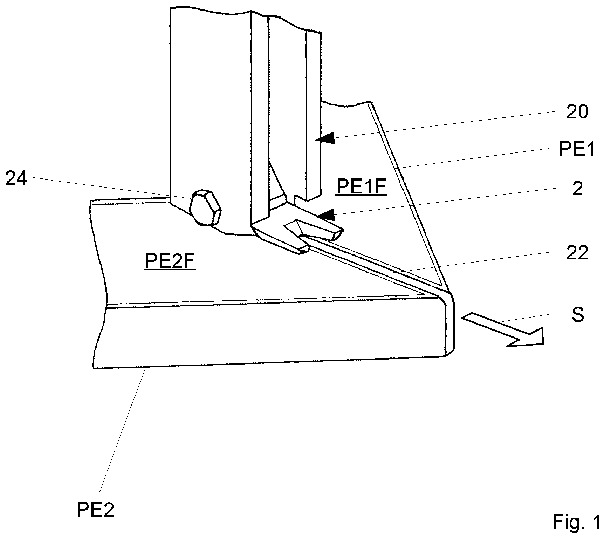

**Fig. 1** zeigt die Verwendung eines Messers 2 und eines Messerhalters 20 mit Grundkörper beim Nutschneiden und Abstechen eines Schweißwulstes 22 an zwei zusammengeschweißten Kunststoffprofilen PE1, PE2. Der Messerhalter 20 ist hierbei Teil einer nicht weiter dargestellten Bearbeitungsmaschine, die speziell für das Bearbeiten des Stoßes der Kunststoffprofile PE1, PE2 eingesetzt ist. Der Messerhalter 20 ist geeignet, um eine Bewegung entlang des Stoßes durchzuführen. Somit wird von dem Messer 2 eine Nut 14 in Schneidrichtung S in den Stoß geschnitten.

Am unteren Ende des Messerhalters 20 ist das Messer 2 befestigt, beispielsweise mittels einer Schraube 24. In dem in Fig. 1 dargestellten Beispiel wird mit Hilfe des Messers 2 der Schweißwulst 22 der rechtwinklig aneinanderstoßenden Kunststoffprofile PE1, PE2 bearbeitet. Die beiden Kunststoffprofile PE1, PE2 bilden hierbei zum Beispiel die Ecke eines Fensterrahmens. Das erste Kunststoffprofil PE1 und das zweite Kunststoffprofil PE2 sind hierbei auf Gehrung geschnitten, wobei Gehrung zum Beispiel 45° beträgt, um ein rechtwinkliges Aneinandersetzen der beiden Kunststoffprofile PE1, PE2 für einen rechtwinkligen Fensterrahmen zu ermöglichen.

Die beiden Kunststoffprofile PE1, PE2 werden stumpfgeschweißt und nachfolgend mittels des Messers 2 bearbeitet, um saubere und ordentliche Kunststoffprofilaußenflächen PE1F, PE2F und Schnittflächen der Nut 14 zu erreichen. Die Kunststoffprofile PE1, PE2 können auf den Kunststoffprofilaußenflächen PE1F, PE2F mit einer Folie und/oder einer Dekorschicht versehen sein.

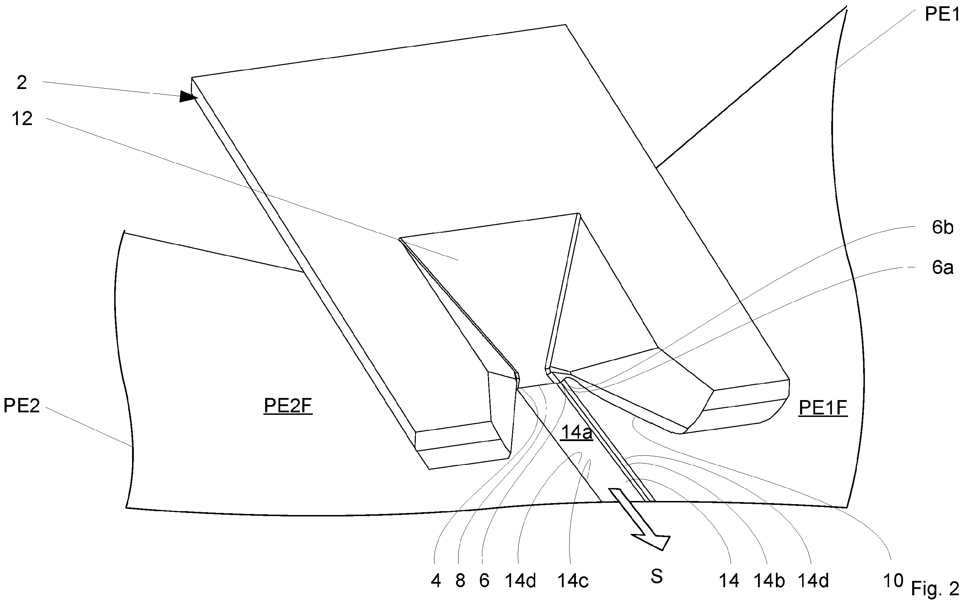

**Fig. 2** zeigt eine mögliche Ausgestaltung des einstückigen Messers 2. Zur Veranschaulichung ist das Messer 2 an eine bereits geschnittene Nut 14 angesetzt.

Die Nut 14 besitzt einen Nutgrund 14a, der parallel zu den Kunststoffprofilaußenflächen PE1F, PE2F verläuft, sowie eine Nutwand 14b und eine gegenüberliegende Nutwand 14c. Jede der Nutwände 14b, 14c geht über einen Radius 14d in die jeweilige Kunststoffprofilaußenfläche PE1F, PE2F über. Ein Grat ist an dieser Stelle vermieden.

Das Messer 2 umfasst eine Hauptschneide 8 zum Schneiden des Nutgrunds 14a und zwei Nebenschneiden 4, 6 zum Schneiden der Nutwände 14b, 14c. Die Hauptschneide 8 ist zwischen den Nebenschneiden 4, 6 angeordnet. Die zwei Nebenschneiden 4, 6 und die Hauptschneide 8 gehen unmittelbar ineinander über, sodass eine durchgehende Gesamtschneide gebildet ist. Ersichtlich ist, dass die zwei Nebenschneiden 4, 6 in Schneidrichtung S vor der Hauptschneide 8 angeordnet sind. Zur Anlage gegen die Kunststoffprofilaußenflächen PE1F, PE2F weist das Messer 2 eine Gleitfläche 10 oder der Messerhalter ein Profilkontaktelement (eine Gleitfläche und/oder Rollen) auf. Das Messer 2 umfasst ferner eine Auswurframpe 12, die in Schneidrichtung S hinter der Hauptschneide 8 angeordnet ist. Die Auswurframpe 12 verläuft in entgegengesetzte Schneidrichtung S und bezüglich des Nutgrunds 14a distanzierend

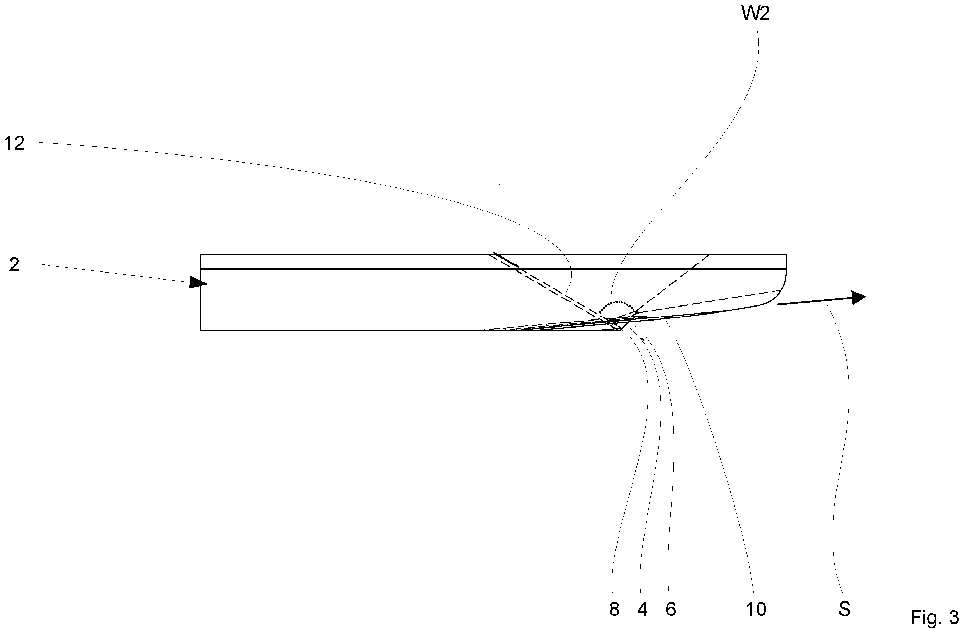

**Fig. 3** zeigt, dass die Hauptschneide 8 mit jeder der zwei Nebenschneiden 4, 6 einen Winkel oder zweiten Winkel W2 von mehr als 90° einschließt, wobei die Betrachtung längsschnittlich erfolgt. Die zwei Nebenschneiden 4, 6 weisen längsschnittlich betrachtet einen vollständig geraden Verlauf auf.

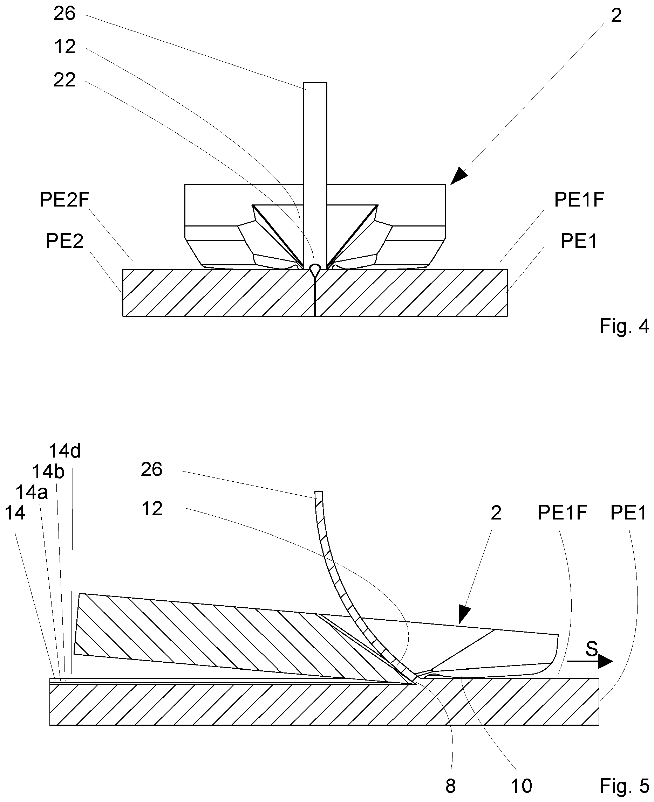

**Fig. 4** zeigt eine Frontansicht (entgegen der Schneidrichtung S) auf das Messer 2 beim Nutschneiden und **Fig. 5** zeigt eine Längsschnittansicht auf das Messer 2 beim Nutschneiden. Das geschnittene Material 26 wird von der Auswurframpe 12 aus der Nut 14 entfernt. In Schneidrichtung S betrachtet schließt die Hauptschneide 8 mit jeder der zwei Nebenschneiden 4, 6 einen Winkel oder ersten Winkel W1 von mindestens 90° ein.

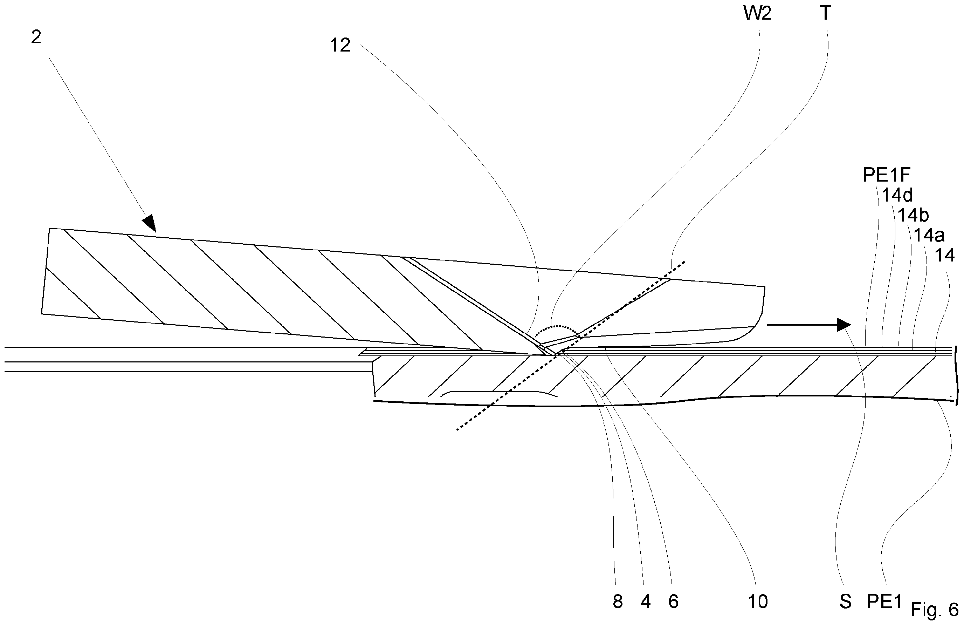

**Fig. 6** zeigt eine Längsschnittansicht ähnlich Fig. 3, jedoch verlaufen die Nebenschneiden 4,6 nun konkav gebogen. Eine Gerade T symbolisiert den Verlauf der Nebenschneiden 4, 6.

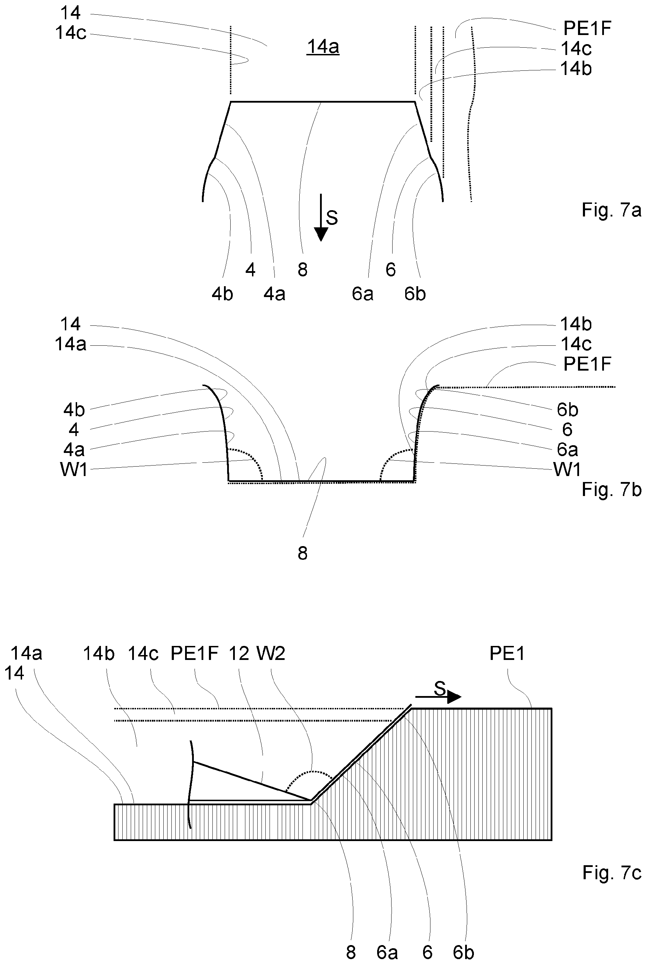

Zur Veranschaulichung diverser Ausgestaltungen und Verläufe der Schneiden 4, 6, 8 wird nun nachfolgend auf die Fig. **7a** bis **9c** verwiesen. Die Fig. 7a, 8a und 9a zeigen jeweils Draufsichten (senkrecht zur Schneidrichtung S) auf die Schneiden 4, 6, 8. Die Fig. 7b, 8b und 9b zeigen jeweils die entsprechenden Frontansichten (entgegen der Schneidrichtung S). Die Fig. 7c, 8c und 9c zeigen jeweils die entsprechenden Längsschnittansichten. In den Fig. 7a bis 9c sind zudem die geschnittenen Nuten 14 skizziert.

In den Fig. 7a, 7b und 7c ist eine durchgehende Gesamtschneide gebildet aus der Hauptschneide 8 und den beidseitigen Nebenschneiden 4, 6. Die Gesamtschneide erstreckt sich ausgehend von den beiden der Hauptschneide 8 abgewandten Außenseiten der Nebenschneiden 4, 6 in Richtung Zentrum der Hauptschneide 8 vollständig in entgegengesetzte Schneidrichtung S. Die zwei Nebenschneiden 4, 6 verlaufen entgegen der Schneidrichtung S zur Hauptschneide 8 hin, wodurch ein negativer Schnittwinkel entsteht. In Schneidrichtung S betrachtet oder entgegen der Schneidrichtung S betrachtet ist der Verlauf der Nebenschneiden 4, 6 konkav gebogen. Jede der Nebenschneiden 4, 6 umfasst einen Nutwandschneideabschnitt 4a, 6a zum Schneiden der entsprechenden Nutwand 14b, 14c und einen Auslaufradiusschneideabschnitt 4b, 6b zum Schneiden des Radius 14d zwischen Nutwand 14b, 14c und Kunststoffprofilaußenfläche PE1F, PE2F. Die Auslaufradiusschneideabschnitte 4b, 6b sind in Schneidrichtung S vor den Nutwandschneideabschnitten 4a, 6a angeordnet. Die Hauptschneide 8 hat sowohl in/entgegen der Schneidrichtung S als auch senkrecht zur Schneidrichtung S betrachtet einen vollständig geraden Verlauf.

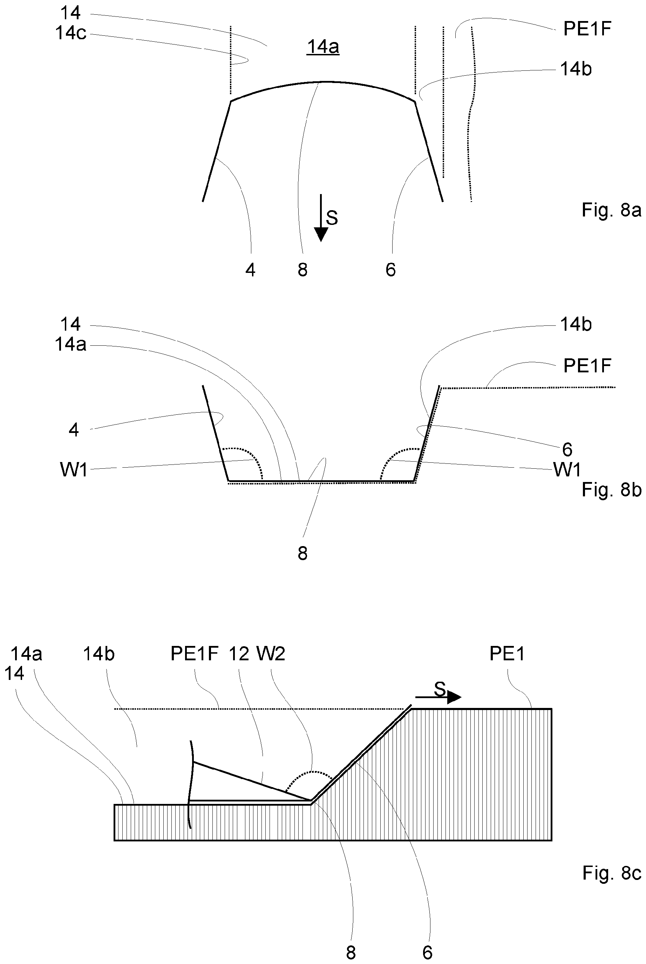

In den Fig. 8a, 8b und 8c ist eine weitere durchgehende Gesamtschneide gebildet aus der Hauptschneide 8 und den beidseitigen Nebenschneiden 4, 6. Die Gesamtschneide erstreckt sich ausgehend von den beiden der Hauptschneide 8 abgewandten Außenseiten der Nebenschneiden 4, 6 in Richtung Zentrum der Hauptschneide 8 vollständig in entgegengesetzte Schneidrichtung S. Die zwei Nebenschneiden 4, 6 verlaufen entgegen der Schneidrichtung S zur Hauptschneide 8 hin, wodurch ein negativer Schnittwinkel entsteht. In Schneidrichtung S betrachtet oder entgegen der Schneidrichtung S betrachtet ist der Verlauf der Nebenschneiden 4, 6 vollständig gerade. Auch senkrecht zur Schneidrichtung S betrachtet ist der Verlauf der Nebenschneiden 4, 6 vollständig gerade. Ein Radius wird nicht geschnitten. Die Hauptschneide 8 hat in/entgegen der Schneidrichtung S einen vollständig geraden Verlauf. Senkrecht zur Schneidrichtung S betrachtet ist der Verlauf der Hauptschneide 8 konkav gebogen. Der Verlauf baucht also in entgegengesetzte Schneidrichtung S aus.

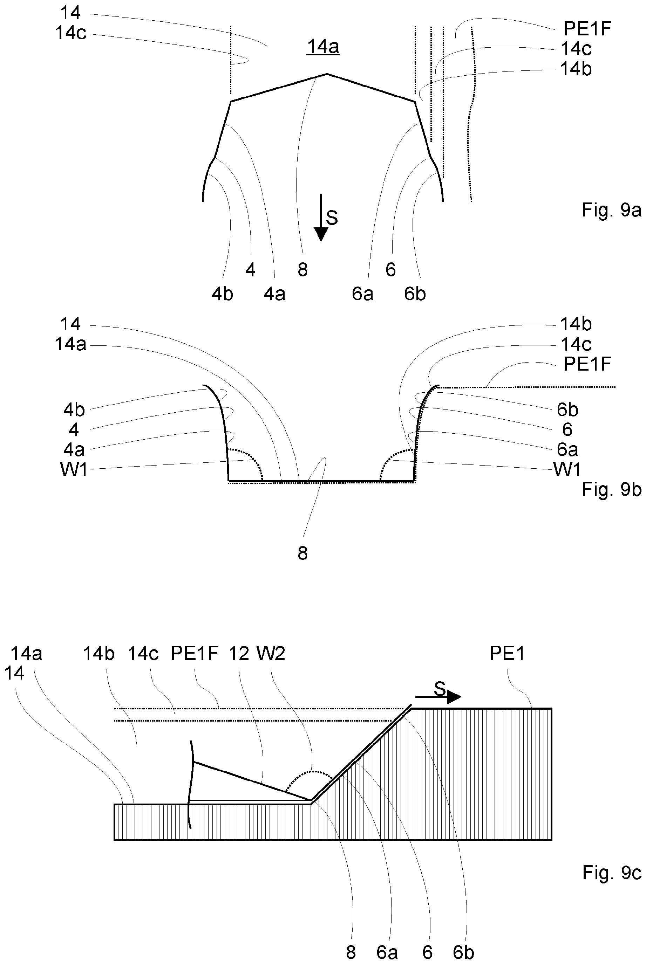

In den Fig. 9a, 9b und 9c ist eine durchgehende Gesamtschneide gebildet aus der Hauptschneide 8 und den beidseitigen Nebenschneiden 4, 6. Die Gesamtschneide erstreckt sich ausgehend von den beiden der Hauptschneide 8 abgewandten Außenseiten der Nebenschneiden 4, 6 in Richtung Zentrum der Hauptschneide 8 vollständig in entgegengesetzte Schneidrichtung S. Die zwei Nebenschneiden 4, 6 verlaufen entgegen der Schneidrichtung S zur Hauptschneide 8 hin, wodurch ein negativer Schnittwinkel entsteht. In Schneidrichtung S betrachtet oder entgegen der Schneidrichtung S betrachtet ist der Verlauf der Nebenschneiden 4, 6 konkav gebogen. Jede der Nebenschneiden 4, 6 umfasst einen Nutwandschneideabschnitt 4a, 6a zum Schneiden der entsprechenden Nutwand 14b, 14c und einen Auslaufradiusschneideabschnitt 4b, 6b zum Schneiden des Radius 14d zwischen Nutwand 14b, 14c und Kunststoffprofilaußenfläche PE1F, PE2F. Die Auslaufradiusschneideabschnitte 4b, 6b sind in Schneidrichtung S vor den Nutwandschneideabschnitten 4a, 6a angeordnet. Die Hauptschneide 8 hat in/entgegen der Schneidrichtung S einen vollständig geraden Verlauf. Senkrecht zur Schneidrichtung S betrachtet ist der Verlauf der Hauptschneide 8 V-förmig; das V öffnet sich in Schneidrichtung S.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 2: Messer
- 4: Nebenschneide
- 4a: Nutwandschneideabschnitt
- 4b: Auslaufradiusschneideabschnitt
- 6: Nebenschneide
- 6a: Nutwandschneideabschnitt
- 6b: Auslaufradiusschneideabschnitt
- 8: Hauptschneide
- 10: Gleitfläche
- 12: Auswurframpe
- 14: Nut
- 14a: Nutgrund
- 14b: Nutwand
- 14c: Nutwand
- 14d: Radius
- 20: Messerhalter
- 22: Schweißwulst
- 24: Schraube
- 26: Material

- S: Schneidrichtung
- T: Gerade
- PE1: Kunststoffprofil
- PE2: Kunststoffprofil
- PE1F: Kunststoffprofilaußenfläche
- PE2F: Kunststoffprofilaußenfläche
- W1: Winkel
- W2: Winkel

## Patentansprüche

1. Messer (2) für das Nutschneiden entlang einer Schneidrichtung (S) im Stoß von zwei zusammengeschweißten Kunststoffprofilen, umfassend zwei Nebenschneiden (4, 6) und eine Hauptschneide (8), welche zwischen den beiden Nebenschneiden (4, 6) angeordnet ist, wobei die zwei Nebenschneiden (4, 6) in Schneidrichtung (S) vor der Hauptschneide (8) angeordnet sind.

2. Messer (2) nach Anspruch 1, **dadurch gekennzeichnet, dass** in Schneidrichtung (S) betrachtet die Hauptschneide (8) mit jeder der zwei Nebenschneiden (4, 6) einen Winkel (W1) von mindestens 90° einschließt.

3. Messer (2) nach einem der voranstehenden Ansprüche, **dadurch gekennzeichnet, dass** längsschnittlich betrachtet die Hauptschneide (8) mit jeder der zwei Nebenschneiden (4, 6) einen Winkel (W2) von mehr als 90° einschließt.

4. Messer (2) nach einem der voranstehenden Ansprüche, **dadurch gekennzeichnet, dass** die zwei Nebenschneiden (4, 6) einen geraden oder gebogenen Verlauf aufweisen.

5. Messer (2) nach einem der voranstehenden Ansprüche, **dadurch gekennzeichnet, dass** die Hauptschneide (8) einen geraden, einen zumindest abschnittsweise gebogenen oder einen V-förmigen Verlauf aufweist.

6. Messer (2) nach einem der voranstehenden Ansprüche, **dadurch gekennzeichnet, dass** die zwei Nebenschneiden (4, 6) unmittelbar in die Hauptschneide (8) übergehen.

7. Messer (2) nach einem der voranstehenden Ansprüche, **dadurch gekennzeichnet, dass** die zwei Nebenschneiden (4, 6) entgegen der Schneidrichtung (S) zur Hauptschneide (8) hin verlaufen.

8. Messerhalter (20), umfassend
ein Messer (2) gemäß einem der voranstehenden Ansprüche und zumindest ein Profilkontaktelement.

9. Messerhalter (20) nach Anspruch 8, **dadurch gekennzeichnet, dass** das Profilkontaktelement eine Gleitfläche oder zumindest eine Rolle ist.
